Europäisches Patentamt

European Patent Office

Office européen des brevets

(11) Publication number : **0 493 062 A1**

## (12) EUROPEAN PATENT APPLICATION

(21) Application number : **91311932.7**

(22) Date of filing : **23.12.91**

(51) Int. Cl.⁵ : **B26F 3/08, B26D 1/00, B26D 7/10, B29D 30/46**

(30) Priority : **21.12.90 JP 412614/90**

(43) Date of publication of application :
**01.07.92 Bulletin 92/27**

(84) Designated Contracting States :
**DE ES FR GB IT**

(71) Applicant : **Bridgestone Corporation**
**10-1, Kyobashi 1-Chome Chuo-Ku**
**Tokyo 104 (JP)**

(72) Inventor : **Osawa, Masayuki**
**3-3-4-306, Ogawahigashi-cho**
**Kodaira-shi, Tokyo (JP)**
Inventor : **Inoue, Shunichi**
**3-3-3-401, Ogawahigashi-cho**
**Kodaira-shi, Tokyo (JP)**

(74) Representative : **Silverman, Warren et al**
**HASELTINE LAKE & CO. Hazlitt House 28**
**Southampton Buildings Chancery Lane**
**London WC2A 1AT (GB)**

(54) **Method and apparatus for cutting and shaping elongate thermoplastically deformable material.**

(57)    A joining surface is formed at a cut end portion of a belting member (32a). The cut end portion is, simultaneously with the cutting produced, inclined at a small angle with respect to the surface of the belting member. For this purpose, belting (32) on a conveyor belt (6) is pinched under pressure exerted between an upper die (29) and a lower die (33) which are heated respectively by heaters (30) and (34). The belting is thus subjected to plastic deformation and cutting and hence inclined joining surfaces (44a, 44b) are formed at the cut end portions. To produce this cut a die holding member (24) holding the upper die is reciprocated in the vertical direction by the action of a rotary shaft (11) having an eccentric cam (18). A separating member (38) which is moved vertically by another cam (40) operates with delay with respect to the movement of the upper die (29), and when the upper die leaves the belting member, the separating member (38) presses the belting member to ensure separation of the die from the belting.

# FIG. 4

This Invention relates to a method and an apparatus for cutting continuous lengths of belting material for use in the manufacture of tyres and for forming inclined surfaces at the cut end portions of the belting for forming a joint, as during manufacture of tyres.

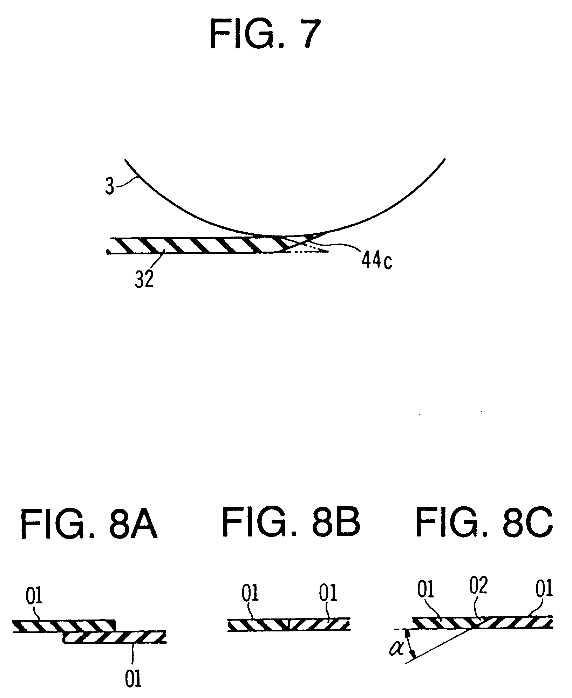

When manufacturing tyres, a raw material specifically belting made of unvulcanized rubber is cut to predetermined lengths, and such lengths are wound around a drum having a circumferential length equal to the cut length of the belting member with its opposite ends being joined together, a joint between the two end portions commonly being formed as a press joint. Such a joint may be of a variety of types as shown, for example in Figures 8A to 8C of the accompanying drawings.

When joining the opposite end portions of a cut length of belting 01 or end portions of two lengths 01 of belting maternal, a lap joint in which the end portions are overlapped as shown in Figure 8A, is frequently used. However, this lap joint produces a thickness of joined portion which is twice as thick as the remainder of the product obtained and hence a structure is obtained which varies due to volume change in that portion, This would adversely affect the product. Especially when manufacturing a tyre, the above-mentioned volume change would adversely affect uniformity and balance of the tyre.

In addition, a butt joint as shown in Figure 8B may also be employed. However formation of this butt joint at the time of forming a thin belting of unvulcanized rubber into a cylindrical shape, is accompanied by manufacturing difficulties. In particular it leads to a product of inadequate strength especially in the case of a tyre, since the belting is subjected to various external forces and deformation before completion.

In Figure 8C is shown a taper joint, wherein tapered or inclined surfaces 02 are formed at the end portions to be joined with each other. Joins are formed at opposite end portions of a length of belting via these inclined surfaces. With this taper joint, volume change will not occur as is the case with the above-described lap joint. Also, it provides a joining surface area which is broad as compared to the above-described butt joint, and the joining force is increased correspondingly. However, in the prior art, since the inclined surface 02 is formed by cutting the belting member 01 obliquely with respect to the direction of thickness by means of a cutter, a small inclination angle of, for instance 20°C or less cannot be achieved, and so, there has been placed a limit on the increase in joining surface area and joining force achievable with the taper method. In addition, since the inclination angle α is large, if the end portions should deviate a little from the expected angle of cut, poor joining, such as formation of steps or voids in the joint would be liable to occur. Hence, in order to overcome the problems that such poor joining portions give rise to so that the joining portions do not adversely affect performance after the belting members have been incorporated in a product tyre, considerable working time has been required in subsequent working steps to overcome difficulties caused by poor joining.

It is therefore an object of the present invention to provide a method and an apparatus for simultaneously cutting and shaping belting members to provide inclined joining surfaces of small angle with respect to the surface of the belting.

According to one aspect of this invention, there is provided a transverse cutting and shaping method for elongate thermoplastically deformable material wherein said material is cut to obtain product lengths thereof and inclined joining surfaces at a predetermined angle formed at the cut end portions of said product lengths, characterized by a positioning conveying step wherein said elongate material is conveyed to position a portion at which a cut is to be made at a die position, the die having a die surface of a shape corresponding to said inclined joining surfaces, a die heating step wherein said die is heated, a cutting and shaping step wherein said die is pressed against said elongate material to extend thereacross to cut said elongate material in its thickness direction and also form said inclined joining surfaces at the cut end portions thereby produced, a die separating step wherein said die and said belting members are separated from each other, and a conveying step wherein the product length which has been cut off from said elongate material is conveyed away from said die.

According to a second aspect of the present invention, there is provided an apparatus for transversely cutting and shaping an elongate thermoplastic material to obtain product lengths thereof and inclined joining surfaces at a predetermined angle at the cut end portions of said product lengths; characterised in that said apparatus comprises a die having a die surface of a shape corresponding to said inclined joining surfaces, heater means for heating said die, conveyor means for conveying said elongate material past said die, die press means for pressing said die against the surface of said elongate material and die separator means for separating said die and said material from each other.

The method and apparatus of this invention are suited to tyre manufacture, with the elongate plastically deformable material being rubber belting and the apparatus forming part of what can be a conventional tyre manufacturing plant.

In practising the present invention, as a result of the fact that the die heated in the die heating step is pressed against the portion of elongate material intended to be cut from the main length thereof in the cutting and shaping step, that portion of elongate material is subjected to plastic deformation and it is cut. At the same time, the cut portions are shaped as they are pressed by the die surface, and inclined joining surfaces inclined at a predetermined angle are formed at the cut end portions. Since the inclined surfaces are shaped by plastic working in the above-described manner, inclined joining surfaces having a small inclination angle can be formed easily. Accordingly, even in the case of a thin elongate member, i.e. typically thin rubber belting, there is formed a join wherein a strong connection via a broad joining surface is formed.

When product belting members are successively cut out from a starting belt, an inclined joining surface at the trailing end of a preceding belting member and an inclined joining surface at the leading end of a succeeding belting member may be formed simultaneously by the above-mentioned die. Accordingly, since the belting member removed from the vicinity of the die in the conveying step has the above-described inclined joining surfaces formed respectively at its leading end and at its trailing end, if this belting member is subsequently wrapped around a shaping drum, the leading end and the trailing end can be jointed extremely smoothly and strongly via a broad inclined joining surface in which the surfaces being joined here have a small inclination angle. It is to be noted that since at this time at least the inclined joining surface at the trailing end is still maintained at a relatively high temperature as a result of shaping by the heated die, extremely good adhesion at the press joint can be obtained.

Especially, if the method according to the present invention is employed in the manufacture of a tyre, a remarkable improvement effect can be obtained in the uniformity and balance as well as in the appearance of the manufactured tyre. In addition, even in the event that when the belting member has been wrapped around a shaping drum and the member adjacent the belting member is a cord-reinforced rubber sheet, when belting and reinforced rubber sheet have been deformed in producing a tyre, a tendency to undesired irregular intervals in the cord arrangement in the cord-reinforced rubber sheet adjacent the joint is reduced, because steps and voids are not present in the vicinity of the joint.

For a better understanding of the invention and to show how the same can be carried into effect, reference will now be made, by way of example only, to the accompanying drawings wherein:

Figure 1 is a side view of a cutting and shaping apparatus for belting according to one preferred embodiment of the invention;

Figure 2 is a partial plan view of the same apparatus;

Figure 3 is a cross-section view taken along line III-III in Figure 2;

Figure 4 is a cross-section view taken along line IV-IV in Figure 3;

Figure 5 shows schematically the successive steps in a process of cutting and shaping belting embodying this invention;

Figure 6 shows schematically a like view to Figure 5 but in respect of an alternative process embodying this invention;

Figure 7 is a schematic view showing the state where a leading end of a length of belting begins to wrap around a shaping drum; and

Figure 8 is a cross-section view showing different types of belting joins according to the prior art, as already described herein.

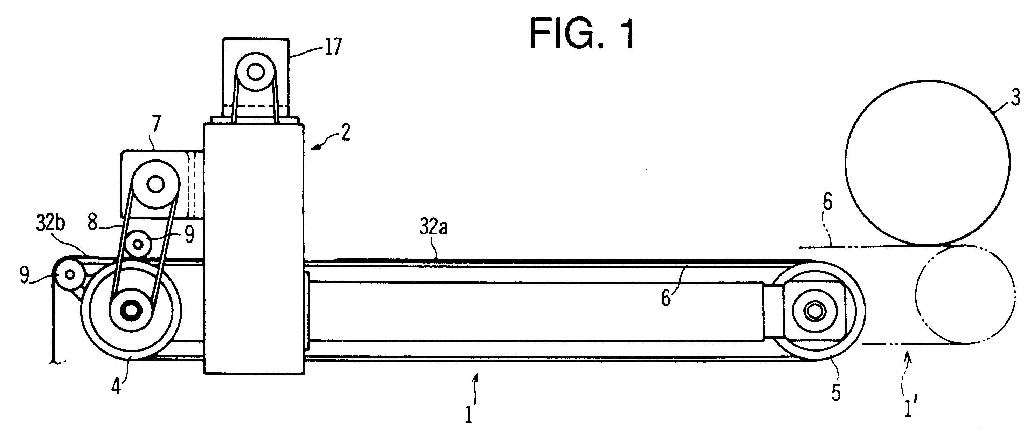

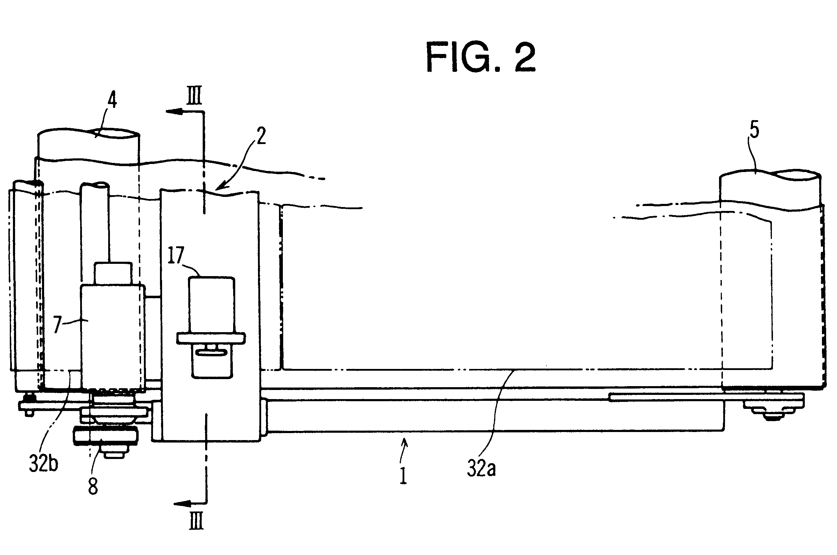

Figure 1 is a generalised side view of a cutting and shaping apparatus according to one preferred embodiment of the present invention, and Figure 2 is a partial plan view of the same apparatus. This apparatus is to be used for cutting belting made of vulcanized rubber to obtain therefrom a belting member having a predetermined length, wrapping this belting member around a shaping drum and joining the opposite ends thereof, and the apparatus comprises a conveyor 1, a cutting and shaping station 2 provided intermediate the ends of the conveyor 1, and a shaping drum 3 disposed above and in front of the conveyor 1.

The conveyor 1 is a belt conveyor, in which a conveyor belt 6 is wrapped around and held under tension between a drive pulley 4 at the rear end of the conveyor and a driven pulley 5 at the front end of the conveyor. The drive pulley 4 to provide forward travel of the conveyor belt 6 is driven via a belt drive 8, itself driven by a drive motor 7 fixedly mounted adjacent the cutting and shaping station 2. It is to be noted that the path of the conveyor belt 6 takes it through the cutting and shaping station 2. Belting 32 serving as starting or raw material is fed onto the conveyor belt 6 from the rear side thereof by means of a guide roller 9 at the side of the drive pulley 4 and it is conveyed forwards by the conveyor belt 6. When the belting member has been conveyed by a predetermined distance, it is cut within the cutting and shaping station 2 by means of a cutting and shaping mechanism therewithin and which will be described later, and hence a belting member 32a having a predetermined length is cut out from belting 32b which follows.

Subsequently, the conveyor belt 6 comes into contact with the shaping drum 3 as a result of the conveyor 1 moving forwards as a whole jointly with the cutting and shaping station 2 and the end of the conveyor 1 is moved upwards as shown by broken lines 1' in Figure 1. If required, the belting 32b is separated from the surface of the conveyor belt 6, and under this condition, if the conveyor belt 6 is being driven, then the belting member 32a cut from the raw material belting 32 is conveyed on by conveyor belt 6, and when it has reached the shaping drum 3, the belting member 32a transfers to the side of the shaping drum 3 and is wrapped around the circumferential surface of the drum. The shaping drum 3 is rotated such that its peripheral speed matches the linear velocity of the conveyor belt 6, and when the leading end and the trailing end of the belting member 32a have overlapped with each other at a contact position between the shaping drum 3 and the conveyor belt 6, they are adhered to each other as a pressing force is exerted between the shaping drum and the conveyor belt 6.

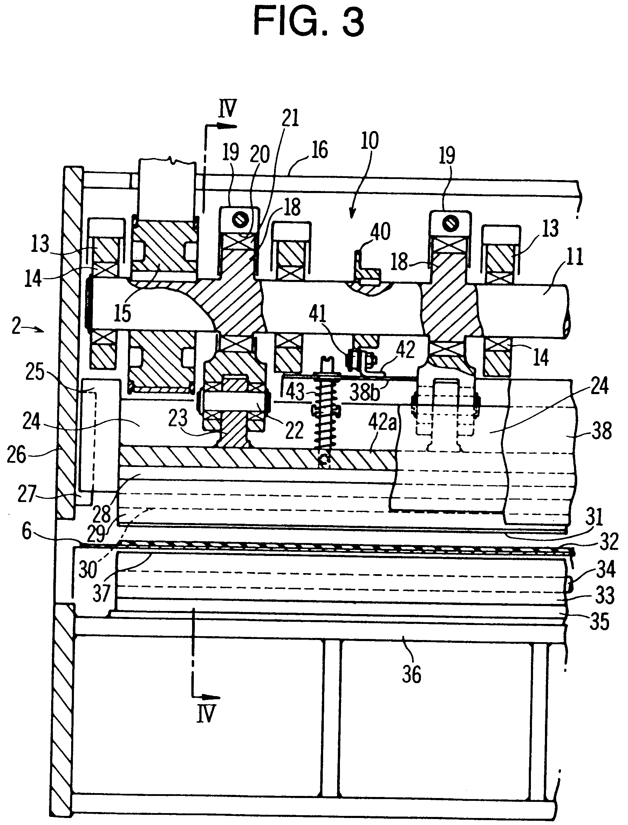

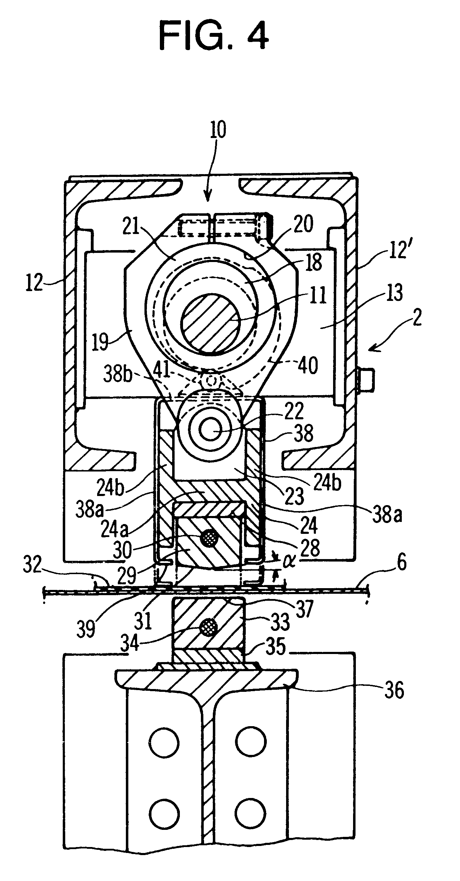

Figures 3 and 4 are illustrations showing a cutting and shaping mechanism 10 provided within the above-mentioned cutting and shaping station 2, Figure 3 being a cross-section view taken along line III-III in Figure 2, and Figure 4 being another cross-section view taken along line IV-IV in Figure 3.

As will be seen from these figures, a first rotary shaft 11 is disposed within the cutting and shaping station 2, the shaft 11 extending above the conveyor belt 6 and extending transverse thereto. This rotary shaft 11 is rotatably mounted in bearings 14 in partition wall members 13 connecting front and rear wall members 12, 12' of the cutting and shaping station 2. Reference numeral 15 denotes a driven pulley fixedly secured to the rotary shaft 11, drive to it being transmitted via a belt from a drive motor 17 (see Figures 1 and 2) supported on a top wall 16 of the cutting and shaping station 2 and operating, as a result, to drive the rotary shaft 11.

Integral with the rotary shaft 11 are also a plurality of eccentric cams 18 being positioned at predetermined intervals therealong. A follower member 19 is fitted around each eccentric cam 18 so as to be rotatable thereby. More particularly, a circular opening 20 provided in the follower member 19 is concentric with the eccentric cam 18, and a bearing 21 is inserted between the inner cirrumferential surface of the circular hole 20 and the outer circumferential surface of the eccentric cam 18. A lower portion of the follower member 19 is forked and a shaft 22 extending transversely of the conveyor belt 6 is pivotally mounted to the follower member 19, penetrating through the respective forked portions. A connecting piece 23 is fitted to this shaft 22 at the inside of the above-mentioned forked portions and extends downwards. At its bottom end, the connecting piece is secured to a die holding member 24 by welding.

The die holding member 24 has an H-shaped cross-sectional configuration as shown in Figure 4, and it extends in the widthwise direction of the conveyor belt 6 from one side to the other side. The above-described connecting piece 23 is secured by welding to a transverse portion 24a of this die holding member 24. At the end portions of front and rear side pieces 24b, 24b are respectively provided planar slide plates 25 extending beyond the side pieces in a direction at right angles to the conveyor belt 6, these slide plates 25 being sandwiched on their outside, between guide plates 27 which project from a side wall 26 of the cutting and shaping station 2 and held in sliding contact with these guide plates 27. Accordingly, the die holding member 24 is restrained so as to be movable only in a direction at right angles to the conveyor belt 6, that is , only in the vertical direction (see Figure 4).

An upper die 29 is fixedly secured to the lower surface of the transverse portion 24a of the die holding member 24 via a heat-insulating plate 28. This upper die 29 also extends across the die holding member 24 from one side piece 24b up to the other side piece 24b and has a heater 30 assembled therein. The type of the heater 30 is arbitrary, and it could be for instance, of a type containing a circulating thermal medium or of electric heater type. The lower surface of the upper die 29 is shaped into a die surface 31 inclined at a predetermined angle $\alpha$ in opposite directions at the portions in front of and behind its centre line position. Ths angle $\alpha$ is the intended angle of inclination of the surfaces to be formed at the cut end portions when belting 32 made of unvulcanized rubber on the conveyor belt 6 is cut in the manner as will be described later. It is a small angle of 20°C or less, for instance, about 5°C. The above-described heater 30 heats this die surface 31 up to a temperature at which the belting 32 becomes softened and can be thermally deformed, that is, about 100°C and preferably 70 to 100°C.

Below the upper die 29, is disposed a lower die 33 in opposition thereto with the conveyor belt 6 being disposed therebetween. The lower die 33 also extends in the widthwise direction of the conveyor belt 6 and a heater 34 which can be similar to the above-described heater 30 is assembled within the lower die 33. However, the top surface of the lower die 33 is formed as a flat die surface 37. This lower die 33 is secured to a base 36 via a heat-insulating plate 35. Since the heat-insulating plate 28 and the heat insulating plate 35 are interposed respectively between the upper die 29 and the holding member 24 and between the lower die 33 and the base 36, heat generated by the heaters 30 and 34 is transmitted only to the die surfaces 31 and 37 respectively, ensuring efficiencies of heat transfer to the die surfaces.

A box-shaped separating member 38 having an opening in its bottom surface and front and rear side walls and an upper wall 38b, is provided on the outside of the die holding member 24 so as to surround the latter, both the front and rear side walls 38a being held in contact with the outer surfaces of the side pieces 24b of the die holding member 24. The lower edges of both side walls 38a of the separating member 38 are bent inwards and form pressing portions 39. A cam 40 which is different from the above-mentioned eccentric cam 18 is mounted to the rotary shaft 11, and a cam follower 41 adapted to respond to this cam 40 is mounted via a bracket 42 to upper wall 38b of the separating member 38. The separating member 38 is blased upwards by means of a spring 43 (Figure 3), and hence the cam follower 41 is always engaged with the cam surface of the cam 40.

When the rotary shaft 11 rotates, the follower members 19 fitting around the eccentric cams move up and down while swinging back and forth about the shaft 22, in response to this vertical movement. As a result, the die holding member 24 performs reciprocating motion in the vertical direction, being guided by the guide plates 27. At the same time, the separating member 38 also performs reciprocating motion in the vertical direction as driven by the cam 40. The direction of eccentricity of the eccentric cam 18 and the cam surface configuration of the cam 40 are preset in such manner that a predetermined phase relation may be maintained between the reciprocating motion of the die holding member 24 and the reciprocating motion of the separating member 38 so that, when the die holding member 24 descends, the separating member 39 starts to descend delayed with respect to the descent of the die holding member 24, and after the die holding member 24 has reached its lowermost point, the separating member also reaches its lowermost point as indicated by broken lines in Figure 4. When the die holding member 24 ascends from its lowermost point, the separating member 38 also starts to ascend, delayed with respect to the die holding member 24.

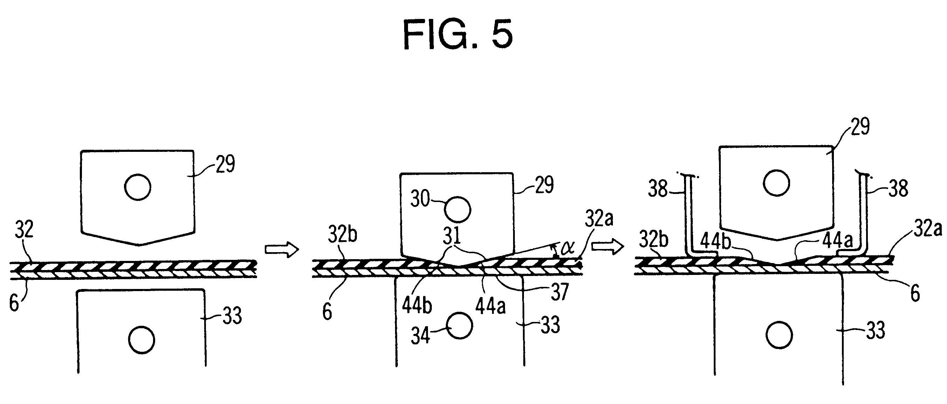

Before explaining the process of cutting and shaping belting 32 by means of the apparatus according to the present invention in the following, it will first be assumed that belting member 32 formed of a suitable raw material and having its leading end cut and shaped into a predetermined configuration by the preceding work, is positioned on the conveyor belt 6 with the above-mentioned leading end positioned under the upper die 29. At this stage, the upper die 29 and the separating member 38 are both in the ascended position as shown in Figure 4. The raw belting 32 is conveyed by a predetermined distance (equal to the desired product length) by driving the conveyor belt 6. The conveyor belt 6 is then stopped (see the drawing at the left hand side of Figure 5). Subsequently, if the rotary shaft 11 is rotated, at first the upper die 29 descends and comes into contact with the belting 32, and it presses the belting member 32 against the die surface 37 of the lower die 33 jointly with the conveyor belt 6 (see central portion of Figure 5). Since the die surfaces 31 and 37 have been heated up by the heaters 30 and 34, respectively, the portion of the belting 32 held in contact with the die surface 31 is softened by the heat transmitted from the die surfaces 31 and 37, and is shaped to match the die surface 31 by the pressure applied by the two dies 29 and 33, and also it is cut into belting member 32a and a raw material belting member 32b. Inclined joining surfaces 44a and 44b are formed on the belting member 32a and the raw material belting member 32b by the die surface 21. The joining inclined surface 44a is disposed at the trailing end of the product belting member 32a, and the joining inclined surface 44b is disposed at the leading end of the product belting member to be cut out next from the raw material belting member 32b. In this way joining inclined surfaces having a small inclination angle $\alpha$ and a broad joining surface area can be formed extremely easily and reliably at the opposite ends of the product belting member by plastic working by means of the dies 29 and 33. It is to be noted that since the material of the conveyor belt 6 is selected as required from for example polytetrafluoroethylene and silicone material, material not influenced by heat transmitted from the dies 29 and 33 being chosen, only the belting 32 is cut and shaped.

During the period when the belting member 32 being cut and shaped by the upper die 29, the separating member 38 descends, and the belting 32 is pressed against the conveyor belt 6 by the pressing pieces 39. During the subsequent ascent of the upper die 29, since the separating member 38 is still pressing against the belting 32, the belting 32 does not become stuck to the die 29 but ascends with the upper die 29 initially and then can be separated from the upper die 29 very smoothly as it is held down by the separating member 38 (see the right hand side portion of Figure 5).

When the separating member 38 also has ascended, the drive to the rotary shaft 11 is stopped, and, with the succeeding raw material belting member portion 32b separated from the surface of the conveyor belt 6, the belting member 32a is conveyed to the shaping drum 3 by driving the conveyor belt 6. At the drum 3, the belting member 32a is wrapped around the shaping drum 3, and on this shaping drum 3 the inclined joining surfaces at the leading end and at the trailing end are overlapped on each other and joined together. When the leading end of the belting member 32 begins to wrap around the circumferential surface of the shaping drum 3, the above-mentioned leading end shaped as shown by dash lines in Figure 7 is deformed to the shape shown by solid lines in Figure 7 by the pinching pressure between the shaping drum 3 and the conveyor belt 6 and adheres to the circumferential surface of the shaping drum 3. As a result the surface on the side of the belting opposite to the surface shaped by the upper die 29 becomes an inclined joining surface 44c having the same inclination angle. Hence the inclined joining surface 44a at the trailing end (see Figure 5) itself overlaps this inclined joining surface 44c. Thus, these inclined surfaces are press joined together by the shaping drum 3 and the conveyor belt 6, and a smooth joining portion, in which a broad joining surface is produced whose thickness does not vary, can be obtained. In addition, the trailing end inclined joining surface 44a is still maintained in a high-temperature condition because not much time has elapsed after the surface 44a was heated by the dies 29 and 33. Accordingly, a better joint than hitherto can be obtained.

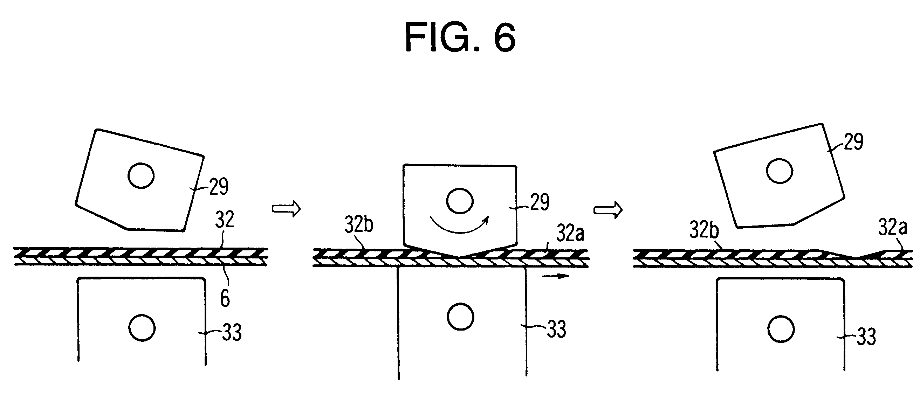

While the intention has been described with respect to one preferred embodiment thereof, the present invention is not to be limited to this preferred embodiment and many modifications thereof can be made. For instance, while the belting member 32 was cut and shaped under a stationary condition in the above-described preferred embodiment, as an alternative to this mode of operation, it is also possible that, as shown in Figure 6, the upper die 29 be made to swing back and forth in synchrony with the conveying velocity of the belting 32 so that the upper die 29 may be engaged with the belting 32 when it has reached its lowermost position as shown at the centre of Figure 6, the upper die 29 cutting and shaping the belting 32 while the swinging is continued and the belting member 32 moves on. In addition, while the upper die 29 travelled in a vertical direction in the above-described preferred embodiment, it is also possible to modify operation so that it is the lower die which travels instead or simultaneously therewith. Furthermore, while an endless conveyor belt 6 is shown to be employed as conveying means in the above-described preferred embodiment, in place of such belt, for instance, gripping conveyor means which conveys a belting member while nipping and end portion thereof may be employed.

Since the inclined joining surfaces of a belting member are formed as described above, according to the present invention, by plastic working by means of dies, inclined joining surfaces having a small inclination angle can be formed easily, and accordingly, even in the case of thin belting, a joint in which the belting members are strongly joined via a broad joining surface area, can be produced. In addition, the volume change at the joint is small, and, especially if the present invention is applied to manufacture of tyres, a remarkable improvement can be obtained both in the uniformity and balance of the product tire and in its appearance. Moreover, when the belting member has been wrapped around a shaping drum in producing a tyre, the member adjacent the belting member being a cord-reinforced rubber sheet, since a working step and voids are eliminated in forming the joint in the belting, when the belting member has been formed into a tyre, there can be a reduction in the distribution of different intervals of the cords arrayed in the cord-reinforced rubber sheet adjacent to this joint.

**Claims**

1. A transverse cutting and shaping method for elongate thermoplastically deformable material (32) wherein said material is cut to obtain product lengths (32a) thereof and inclined joining surfaces (44a, 44b) at a predetermined angle formed at the cut end portions of said product lengths, characterized by a positioning conveying step wherein said elongate material (32) is conveyed to position a portion at which a cut is to be made at a die position, the die (29) having a die surface (31) of a shape corresponding to said inclined joining surfaces (44a, 44b), a die heating step wherein said die (29) is heated, a cutting and shaping step wherein said die (29) is pressed against said elongate material (32) to extend thereacross to cut said elongate material in its thickness direction and also form said inclined joining surfaces at the cut end portions thereby produced, a die separating step wherein said die (29) and said elongate material (32) are separated from each other, and a conveying step wherein the product length (32a) which has been cut off from said elongate material (32) is conveyed away from said die.

2. A method as claimed in Claim 1, wherein during said cutting and shaping step, said elongate material (32) is stationary.

3. A method as claimed in Claim 1, wherein during said cutting and shaping step, said elongate material (32) is in motion.

4. A method as claimed in any preceding claim, wherein said elongate themoplasticlly deformable material (32) is vulcanised rubber belting for use in the manufacture of a tyre.

5. An apparatus for transversely cutting and shaping an elongate thermoplastic material (32) to obtain product lengths (32a) thereof and inclined joining surfaces (44a, 44b) at a predetermined angle at the cut end portions of said product lengths; characterized in that said apparatus comprises a die (29) having a die surface (31) of a shape corresponding to said inclined joining surfaces (44a, 44b), heater means (30) for heating said die (29), conveyor means (6) for conveying said elongate material past said die (29), die press means (24) for pressing said die against the surface of said elongate material, and die separator means for separating said die and said material from each other.

6. An apparatus as claimed in Claim 5, wherein said die press means (24) has drive means therefor comprising a rotary shaft (11) integrally provided with an eccentric cam (18), a follower member (19) for contacting by said eccentric cam and arranged concentrically therewith and rotatable relatively thereto, a die holding member (24) pivotally carried by said follower member (19) for holding said die (29), and a guide member (25) for guiding said holding member (24) and restricting the direction of movement of said die holding member (24) to a direction perpendicular to the surface of said elongate material (32).

7. An apparatus as claimed in Claim 6, wherein said die separator means comprises a separating member (38) displaceable in a direction perpendicular to the surface of said elongate material (32) while being delayed with respect to the movement of said die holding member (24), another cam (4) provided on said rotary shaft (11) providing drive to said separating member (38) which is engaged with the surface of the elongate material (32) when said die (29) retreats from said surface and separates the elongate material (32) from said die (29).

8. An apparatus as claimed in any one of Claims 5 to 7, which forms part of a tyre manufacturing plant, wherein said elongate thermoplastically deformable material (32) is rubber belting.

FIG. 1

FIG. 2

# FIG. 3

# FIG. 4

# FIG. 5

EP 0 493 062 A1

FIG. 6

# FIG. 7

3

32

44c

# FIG. 8A

01

01

# FIG. 8B

01

01

# FIG. 8C

01

02

01

$\alpha$

| European Patent Office | EUROPEAN SEARCH REPORT | Application Number |
|---|---|---|

EP    91 31 1932

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | AU-B-529 007 (BRIDGESTONE TIRE COMPANY)<br><br>* claim 2; figure 3 * | 1,2,4,5, 8 | B26F3/08<br>B26D1/00<br>B26D7/10<br>B29D30/46 |
| Y | | 3,6,7 | |
| Y | US-A-4 016 320 (HARRIS)<br>* column 2, line 20 - line 25; figure 2 *<br>--- | 3 | |
| Y | DE-U-8 713 559 (HERBERT OLBRICH GMBH)<br>* the whole document *<br>--- | 6 | |
| Y | DE-A-3 338 684 (DAIMLER-BENZ AG)<br>* page 5, line 31 - page 6, line 29; figure *<br>--- | 7 | |
| A | US-A-4 426 901 (HOGAN ET AL)<br>* the whole document *<br><br>----- | 1,5 | |
| | | | **TECHNICAL FIELDS SEARCHED (Int. Cl.5 )**<br><br>B26D<br>B29D<br>B26F |

The present search report has been drawn up for all claims

| Place of search | Date of completion of the search | Examiner |
|---|---|---|
| THE HAGUE | 01 APRIL 1992 | GARELLA M.G.C.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)